# EUROPÄISCHE PATENTSCHRIFT

(11) **EP 1 976 935 B1**
(45) Veröffentlichungstag und Bekanntmachung des Hinweises auf die Patenterteilung: **21.11.2012**
(21) Anmeldenummer: 07717770.7
(22) Anmeldetag: 09.01.2007
(51) Int. Cl.: C08L 101/00, C08L 97/02, C08J 11/04

(54) **FORMKÖRPER AUS KUNSTSTOFF AUFWEISENDEN PULVERLACKRESTEN, MINERALISCHEN LEICHTZUSCHLAGSTOFFEN UND NACHWACHSENDEN ROHSTOFFEN SOWIE IHRE VERWENDUNG INSBESONDERE IM BAU- UND HANDWERKSBEREICH**
PLASTIC MOULDED BODY COMPRISING POWDER PAINT RESIDUES, MINERAL LIGHTWEIGHT AGGREGATES AND RENEWABLE RAW MATERIALS AND USE THEREOF, IN PARTICULAR, IN THE CONSTRUCTION AND CRAFT INDUSTRY
CORPS FAÇONNES A BASE DE RESIDUS DE PEINTURES EN POUDRE CONTENANT DU PLASTIQUE, D'AGREGATS LEGERS MINERAUX ET DE MATIERES PREMIERES RENOUVELABLES ET LEUR UTILISATION, EN PARTICULIER DANS LE DOMAINE DU BATIMENT ET DE L'ARTISANAT

(30) Priorität: 09.01.2006 DE 102006002426; 09.01.2006 DE 102006002425; 09.01.2006 DE 202006000751 U; 10.05.2006 EP 06090072
(43) Veröffentlichungstag der Anmeldung: 08.10.2008
(73) Patentinhaber: Koryszczuk, Kurt, 16548 Glienike-Nordbahn (DE)
(72) Erfinder: Koryszczuk, Kurt, 16548 Glienike-Nordbahn (DE)
(74) Vertreter: Boeckh, Tobias
(86) Internationale Anmeldenummer: PCT/DE2007/000016
(87) Internationale Veröffentlichungsnummer: WO 2007/079719

(56) Entgegenhaltungen:
- WO-A-02/100616
- DE-A1- 4 441 765
- DE-A1- 10 304 748
- DE-U1- 9 418 618
- US-B1- 6 171 688

## Beschreibung

Die Erfindung betrifft einen Formkörper aus Kunststoffen, die bevorzugt in Pulverlacken enthalten sind, mineralischen Leichtzuschlagstoffen und nachwachsenden Rohstoffen, insbesondere Seegras, Algen, Jute, Sisal und/oder Hanf, und die Verwendung dieser.

Im Stand der Technik sind verschiedene Formkörper bekannt, die vor allem als Bau- oder Möbelverbundstoffe im Außen- oder Innenbereich eingesetzt werden können. Diese enthalten als Inhaltsstoffe überwiegend Zellulose bzw. Holzfasern oder andere Abfälle aus der Holzverarbeitenden Industrie. Die Formkörper werden als Formplatten im Bau-, Haus- und Handwerksbereich eingesetzt. Bei der Herstellung dieser Platten werden zur Bindung der Inhaltsstoffe vor allem thermohärtende Harze eingesetzt, die allerdings nur unter sehr hohem Druck und sehr hohen Temperaturen miteinander reagieren. In der Regel ist es erforderlich, die Komponenten so stark zu erhitzen bzw. zu brennen, dass bei der Herstellung mindestens eine erhitzte Flüssigkeitsphase vorliegt. In der DE G 94 18 618.9 U1 werden Formkörper offenbart, die dadurch gewonnen werden, dass Pulverlacke als Bindemittel eingesetzt werden. Sofern im Zusammenhang mit der Erfindung von Pulverlacken die Rede ist, bezieht sich das bevorzugt auf Pulverlackreste. Die Pulverlacke werden mit lignin- und/oder zellulosehaltigen Komponenten vermischt und anschließend einem Brennprozess ausgesetzt. Hierbei wird die Eigenschaft von Pulverlacken ausgenutzt, bei diesen Temperaturen zusammenzufließen, wobei die Pulverlacke - wie oben bereits angeführt - die Funktion eines Bindemittels übernehmen, wobei in dieses Bindemittel holzartige und zelluloseartige Materialien eingelagert werden. Es hat sich jedoch gezeigt, dass Pulverlackreste nicht als Bindemittel eingesetzt werden können, da diese Reste wenig Härtekomponenten aufweisen und dadurch nicht noch einmal aufgeschmolzen werden kann. Es findet vielmehr eine Verklebung der Kunststoffpartikel der Pulverlackreste statt. Dieser Vorgang ist nachteilhafterweise reversibel. D. h., die so gewonnen Formkörper werden bei thermischer Belastung wieder plastisch formbar, wodurch sie in der Praxis nicht sinnvoll eingesetzt werden können.

Weiterhin sind im Stand der Technik so genannte maßhaltige Formkörper bekannt. Diese maßbeständigen Formkörper, die mit dem Verfahren gemäß des o. g. Gebrauchsmusters nicht herstellbar sind, können durch ein Verfahren gewonnen werden, bei dem körnige oder pulverförmige Pulverlacke mit Holzmehl in Kontakt gebracht werden. Hierdurch wird eine Mischung erhalten, die bei einem Druck von 60 N/m² und einer Temperatur von mindestens 150°C, in der Regel aber bei Temperaturen von über 200°C (210°C), für mindestens 20 Minuten verpresst werden. Es hat sich jedoch gezeigt, dass derartige Formkörper praktisch nicht herstellbar sind, weil die Flächen des aushärtenden Formkörpers mit den Flächen der Form, in der sie gepresst werden, so verkleben, dass das Ablösen nur durch Einwirkung mechanischer Kräfte - und demgemäß nur mit großen Problemen - möglich ist. Auch durch die Zugabe von Härtern konnte keine Verbesserung beim Ablösen zwischen den Flächen des aushärtenden Formkörpers und der Form erreicht werden. Dies liegt vermutlich insbesondere daran, dass Pulverlacke aus polymeren Bindemitteln, Additiven und Pigmenten bestehen, die während ihrer ursprünglichen Herstellung extrudiert und gemahlt werden. Beim Extrudieren werden diese Komponenten unter hohen Temperaturen intensiv gemischt. Um derartige Komponenten als Bindemittel in einem Formkörper einsetzen zu können, müssten diese Pulverlackreste wiederum mit Härtekomponenten extrudiert und vermahlt werden, wodurch im Prinzip aber ein neuer Pulverlack hergestellt werden würde. D. h. die sinnvolle Verarbeitung von Pulverlackresten ist mit den bekannten Verfahren nicht möglich, da alle Aufbereitungen dieser Pulverlackreste, die erforderlich wären, um sie bei der Herstellung der Formkörper einzusetzen, im Prinzip die Neuherstellung von Pulverlacken bedeuten würde. Auch wenn der Ausgangsmischung Katalysatoren oder Initiatoren zugesetzt werden, bleiben die oben beschriebenen Nachteilen bestehen. Zwar kann durch Katalysatoren die Aushärtzeit verringert werden, was aber in der Praxis dazu führt, dass nun innerhalb kürzester Zeit eine feste Verbindung zwischen Formkörper und Form ausgebildet wird, die nur noch mechanisch trennbar ist. Nachteilhafterweise führen derartige Verfahren nicht zu Formkörpern, die sinnvoll eingesetzt werden können, da die mechanische Trennung zu erheblichen Störstellen bzw. zur kompletten Zerstörung der Formkörper und zum Teil auch der Form führt.

Im Stand der Technik ist auch versucht worden, diese Nachteile dadurch zu beheben, dass zusätzliche Wachse, insbesondere auf Basis von Polyethylen bzw. Polytetrafluorethylen der Ausgangsmischung zugesetzt werden. Dieser Zusatz der Wachse verbessert zwar das Gleitverhalten, die Glätte und die Kratzfestigkeit der Formkörper an seiner Außenstruktur, führt aber dazu, dass die eingesetzten Wachse im Formkörper wie ein Trennmittel wirken, wodurch dieser brüchig und instabil wird. Aufgrund der genannten Nachteile ist es nicht möglich, die im Stand der Technik bekannten Lehren so weiter zu entwickeln, dass in der Praxis anwendbare Formkörper auf Basis von Kunststoffen mit mindestens 50 Gew.-% Polyester-, Epoxid-, Polystyrol-, Polyurethan- und/oder Polyamid-Anteil, insbesondere von Pulverlacken mit einer Korngröße von 0,01 bis 3 mm, bevorzugt 0,05 bis 1 mm, insbesondere 0,1 bis 0,5 mm, bereitgestellt werden können.

DE 103 04 748 A1 offenbart eine spritz- und härtbare Masse umfassend Pulverlackreste, mineralische Leichtzuschlagstoffe und Tannin. In den Beispielen wird die Masse entweder bei Raumtemperatur getrocknet (nicht gehärtete Masse), oder 30 min. auf 160°C oder 180°C erhitzt (gehärtete Masse). Die Masse wird nicht verpresst.

WO 02/100616 A1 offenbart einen Formkörper aus einer Mischung von Pulverlackresten und nachwachsenden Rohstoffen (Holzpartikeln oder -pulver). Die Ausgangsstoffmischung wird bei Temperaturen von 130-180°C verpresst.

Aufgabe der Erfindung war es daher, die Nachteile des Standes der Technik zu beseitigen und insbesondere die Herstellung von Formkörpern bei einer Temperatur von 5° bis 45° Celsius zu ermöglichen.

Die Erfindung löst dieses Problem durch Formkörper gemäß der Ansprüche. Bevorzugte Ausführungsformen ergeben sich aus den Unteransprüchen.

Die erfindungsgemäße Lehre ist demgemäß auch eine Kombinationserfindung, bei der die genannten Elemente zur Erreichung eines technischen Gesamterfolges zusammenwirken, wodurch durch die funktionelle Wechselwirkung der Kunststoffe, der mineralischen Leichtzuschlagstoffe und der nachwachsenden Rohstoffe ein synergistischer Effekt entsteht, welcher sich in den überraschenden Eigenschaften der Formkörper zeigt. So war es beispielsweise völlig überraschend, dass die erfindungsgemäßen Formkörper sehr gute Schallabsorptionseigenschaften aufweisen, Schädlingen und Pilzen keinen Nährboden bieten und außerdem überraschend sehr gut wärmedämmend und chemisch beständig sind. Die im Formkörper vereinigten genannten Elemente (a) bis (c) kooperieren dergestalt, dass sie sich in dem Formkörper auf eine Art und Weise gegenseitig beeinflussen, dass sie den Gesamterfolg der oben genannten überraschenden Eigenschaften herbeiführen. Erfindungsgemäß kommt es demgemäß zu einer so genannten funktionellen Verschmelzung der einzelnen Elemente. Im Stand der Technik gab es für den Durchschnittsfachmann keine Anregung, gerade diese Elemente in einem Formkörper zusammenwirken zu lassen. Die Elemente (a) bis (c) gehören insbesondere zu den Recycling-Stoffen. Es war überraschend, dass vor allem die Verwendung von Recycling-Stoffen zu den überraschenden Eigenschaften führt. Weiterhin werden die Recycling-Stoffe als Ausgangsstoffe durch die Kombination in einem Formkörper überraschend in ein unbedenkliches Endprodukt mit vorteilhaften Eigenschaften überführt.

Dem durchschnittlichen Fachmann sind die Begriffe "Pulverlackreste", "mineralische Leichtzuschlagstoffe" und "nachwachsende Rohstoffe" aus verschiedenen Standardpublikationen oder verschiedenen Vorschriften zu Recycling-Stoffen bekannt. Nachwachsende Rohstoffe gehören bevorzugt zu den erneuerbaren Ressourcen. Sie sind bevorzugt land- und forstwirtschaftlich erzeugte Produkte, die einer Verwendung im Nicht-Nahrungsbereich zugeführt werden. Selbstverständlich ist es auch möglich, land- und forstwirtschaftlich erzeugte Produkte, zu denen auch die Fischerei, die Strandbewirtschaftung oder der Gartenbau gehört, zu verwenden, die vollständig oder teilweise dem Nahrungsbereich zugeordnet werden können (z. B. Algen als Nahrungsmittel oder Füllstoff in Matratzen). Bekannte nachwachsende Rohstoffe sind beispielsweise Holz, Schafwolle, Baumwolle, Stroh oder Weidenruten. Die nachwachsenden Rohstoffe können jeweils verschiedenen Verwendungen zugeführt werden, wie beispielsweise Raps als Nahrungsmittel oder aber als Kraftstoffquelle, beispielsweise für Biodiesel. Nachwachsende Rohstoffe sind im Sinne der Erfindung aber auch solche, die nicht land- oder forstwirtschaftlich erzeugt werden, sondern ein- oder mehrmalig aus der Natur gewonnen werden können; wie z. B. Seegras, welches an den Stränden oder im Meer gewonnen werden kann. Da die Verarbeitung von nachwachsenden Rohstoffen durch Industrie, Forschung und zum Teil Regierungen gefördert wird, gibt es zahlreiche Definitionen für den Begriff der nachwachsenden Rohstoffe. Dennoch ist dem durchschnittlichen Fachmann bekannt, was er unter dem Begriff des nachwachsenden Rohstoffs zu verstehen hat. Es handelt sich hierbei im wesentlichen um organische Produkte, die mit oder ohne das Einwirken des Menschen durch die Natur generiert werden. Im wesentlichen handelt es sich, wie oben angeführt, um land- und forstwirtschaftlich erzeugte Produkte des Nicht-Nahrungsbereiches. Der Begriff der landwirtschaftlich erzeugten Produkte umfasst hierbei auch Produkte, die durch die Pflege von Erholungsgebieten - wie z. B. Stränden - erzeugt werden können, wie z. B. Muschelreste, Buhnenholz, Quallen oder Algen, insbesondere Seegras. Die Zuwendungsgeber, die die Verarbeitung von nachwachsenden Rohstoffen fördern, veröffentlichen regelmäßig Listen von Stoffen, die als nachwachsende Rohstoffe zu klassifizieren sind (z. B. Fachagentur nachwachsende Rohstoffe e.V. in Zusammenarbeit mit dem Bundesministerium für Ernährung, Landwirtschaft und Verbraucherschutz in Deutschland oder den entsprechenden Pendants in anderen Ländern). Demgemäß gehören zu den nachwachsenden Rohstoffen beispielsweise auch Flachs, Hanffasern, Wiesengras, Schafwolle, Getreidegranulat, Zellulose, Sisal, Jute, Kokos oder Holz.

Überraschenderweise hat sich gezeigt, dass die erfindungsgemäßen Formkörper bevorzugt mit Ausgangsstoffen hergestellt werden können, für die teilweise ein Deponieverbot besteht. Diese Ausgangsstoffe werden in den Formkörpern so gebunden, dass ein umweltfreundliches Produkt bereitgestellt werden kann, welches eine geringe Dichte aufweist, Wasser abweisend ist, temperaturbeständig, nicht brennbar, wärmedämmend, chemisch beständig, alkalibeständig, witterungsbeständig, lösungsmittelfrei, geruchsneutral, sehr stabil und/oder druckfest ist.

Der Formkörper besitzt gute Schallabsorptionseigenschaften und bietet weiterhin Schädlingen und Pilzen keinen Nährboden, wobei diese überraschenden Eigenschaften besser sind als bei bekannten Formkörpern oder beispielsweise bekannten Dämmstoffen aus den oben genannten nachwachsenden Rohstoffen. Vorteilhafterweise bestehen weiterhin nahezu unbegrenzte Möglichkeiten der Formgestaltung. Es war völlig überraschend, dass die erfindungsgemäßen Erzeugnisse mithilfe von Pulvern, Lacken, Streichen, Kunststoffüberzügen und Selbsteinfärbungen so gestaltet werden können, dass die Oberflächen verschiedenste Farben und Formen aufweisen. Die erfindungsgemäßen Erzeugnisse sind beispielsweise nur halb so schwer wie zahlreiche im Stand der Technik bekannte Formkörper (wie z. B. Trespa).

Die Formkörper werden hergestellt, indem die Ausgangsstoffe bevorzugt als Pulver oder Granulat vorliegen. Die mittlere Teilchengröße der Pulverlackreste beträgt bevorzugt 10 bis 25 µm. Selbstverständlich sind auch Pulverlackreste mit einer größeren oder kleineren Teilchengröße einsetzbar. Die recycelten Glaskugeln, die bevorzugt als Blähglas eingesetzt werden, haben eine Korngrößenverteilung von bevorzugt 0,1 bis 0,3 mm. Wenn vorzugsweise Seegras als nachwachsender Rohstoff eingesetzt wird, liegt dieser bevorzugt auch in Pulverform vor. Den Formkörpern können zahlreiche Rest- bzw. Füllstoffe zugesetzt werden, wie z. B. Sand, Keramik, Textiliengewebe oder auch andere Verbundstoffe. Weiterhin können fossile Rohstoffe, wie z. B. Kohleteilchen, Kohlestaub oder Graphit, aber auch metallische Werkstoffe zugesetzt werden.

Demgemäß können durch die Formkörper schädliche Stoffe in nicht gesundheits- oder umweltschädigende Reststoffe umgewandelt werden, wobei diese Reststoffe, wie oben ausgeführt, durch das Pressen so gestaltet werden können, dass sie vor allem als Baumaterialien, beispielsweise als Verbindungselement bzw. als Wand- oder Fassadenkonstruktion oder als ziegelartige Einzelelemente oder Fertigbauteile eingesetzt werden können. Reststoffe im Sinne der Erfindung gemäß der nationalen bzw. internationalen Vorschriften oder Standardwerken sind bevorzugt Materialien mit bekannter Zusammensetzung und mit nur geringen organischen Anteilen, die weder Gase noch leicht wasserlösliche Stoffe abgeben können. Selbstverständlich kann es auch vorgesehen sein, Reststoffe zu verwenden, die Gase und/oder wasserlösliche Stoffe abgeben. Reststoffe sind gemäß den Umweltvorschriften Stoffe, die im wesentlichen nicht erwünscht sind, aber unvermeidlich bei fast allen industriellen Prozessen anfallen. Durch die verschiedenen Umweltvorschriften ist der Begriff der Reststoffe für den Fachmann mit durchschnittlichem Können ausreichend klar definiert (z. B. Reststoffbestimmungsverordnung; wonach Reststoffe bewegliche Sachen sind, die bei der Herstellung, Be- oder Verarbeitung von Gütern in gewerblichen Anlagen oder im Rahmen sonstiger wirtschaftlicher Unternehmen (im Unterschied zu Produkten) unbeabsichtigt anfallen (z. B. bei einer Rauchgasentschwefelung anfallender Gips)). Im Sinne der Erfindung sind beispielsweise die Pulverlackreste Reststoffe, die gemäß des von zahlreichen Regierungen herausgegebenen Reststoffverwertungsgebotes nicht einfach deponiert, sondern einer neuen Verwertung zugeführt werden. Aber auch Länder, in denen keine Reststoffverwertungsgebote oder Reststoffbestimmungs-Verordnungen vorliegen, sind bestrebt, Reststoffe nicht dem Abfall zuzufügen, sondern sie weiter zu verwerten. Der Begriff des Abfalls ist nationalen und internationalen Verträgen und Umweltvorschriften für den durch-schnittlichen Fachmann ausreichend klar definiert. Reststoffe im Sinne der Erfindung sind insbesondere Stoffe, die bei der Energieumwandlung oder bei der Herstellung, Be- oder Verarbeitung von Stoffen anfallen, ohne dass der Zweck des Anlagebetriebes hierauf gerichtet ist, bzw. für bewegliche Sachen, die bei der Herstellung, Be- oder Verarbeitung von Gütern in gewerblichen Anlagen oder im Rahmen sonstiger wirtschaftlicher Unternehmen unbeabsichtigt anfallen und verwertet werden können. Mit Inkrafttreten des Kreislaufwirtschafts- und Abfallgesetzes und der damit verbundenen Übernahme des europäischen Abfall-Begriffes wurde in Europa der Begriff des Reststoffes in den Abfall-Begriff integriert, der im Kreislaufwirtschafts- und Abfallgesetz definiert ist. Außerhalb von Europa gelten entsprechende Vorschriften der nationalen Gesetzgeber, die den Begriff des Abfalls für den Fachmann ausreichend klar definieren.

Die Ausgangsstoffe werden bevorzugt gründlich gemischt, beispielsweise in einem Labor oder in einem Betonmischer. Diese Mischung kann insbesondere bei einer üblichen Umgebungstemperatur vorgenommen werden (häufig 5 bis 45°C). Bevorzugte Raumtemperaturen liegen im Bereich von 10 bis 30°C, ganz besonders bevorzugt von 17 bis 25°C. Es war völlig überraschend, dass die erfindungsgemäßen Formkörper bei einer Temperatur von 5° bis 45° Celsius hergestellt werden können.

Es war überraschend, dass bei diesen Temperaturen eine Herstellung der Formkörper möglich ist, da im Stand der Technik regelmäßig beschrieben wird, dass während des Herstellungsprozesses Wärme zugeführt werden muss bzw. die Ausgangskomponenten gebrannt werden müssen (diese Erwärmungs- und Brennprozesse liegen im Bereich von 90 bis 300°C). Es war weiterhin überraschend, dass bei den erfindungsgemäß niedrigen Temperaturen Formkörper gewonnen werden.können, die besonders gute wasserabweisende, temperaturbeständige, wärmedämmende und Schallabsorptionseigenschaften aufweisen. Vorteilhafterweise ist das Verfahren von der zusätzlichen Zufuhr von Temperaturen unabhängig. Das Mischen erfolgt so lange, bis sich die eingesetzten Stoffe gleichmäßig verteilt haben. Vorzugsweise ist insbesondere darauf zu achten, dass sich die Epoxid- und oder Polyurethanharzbestandteile aus den eingesetzten Pulverlackresten gut mit den anderen Komponenten vermischt haben. Durch diese Mischung entsteht vorteilhafterweise ein lagerfähiges Halbfabrikat. Dieses Halbfabrikat kann mit einem Ein- oder Zweikomponenten-Kleber vermischt werden, wodurch eine feuchte Mischung entsteht.

Diese Mischung, bevorzugt die feuchte Mischung, wird 0,1 bis 100 Minuten, bevorzugt 1 bis 30 Minuten, besonders bevorzugt 1 bis 10 Minuten bei 5 bis 300 MPa, bevorzugt 20 bis 200 MPa, insbesondere 100 MPa gepresst. Vorteilhafterweise entstehen hierdurch Formkörper, die besonders gute Schallabsorptionseigenschaften aufweisen und die weiterhin besonders gut wärmedämmend und überraschend chemisch beständig, druckfest und alkalibeständig sowie sehr witterungsbeständig sind.

Es ist in einer bevorzugten Ausführungsform vorgesehen, dass die Ausgangsstoffe, insbesondere Pulverlacke, Blähglas und Seegras, zusammen mit dem Zweikomponenten- oder Einkomponenten-Klebstoff direkt (d. h. ohne die Herstellung eines Halbfabrikats) vermischt werden, so dass die feuchte Mischung entsteht, die anschließend gepresst wird. Die Pressung bzw. Verformung der Mischung kann durch einen Doppelbandkalander durch Taktpressen oder durch manuelles Bestücken von Formen, Einrütteln oder leichte Druckanwendung erfolgen, so dass die Produkte in verschiedensten Formen, Farben und Ausgestaltungsformen herstellbar sind.

Vorteilhafterweise sind bereits im Mischungs- bzw. im Ausformungsprozess die Bestandteile des Zwei- oder Einkomponenten-Systems des Klebers relativ flüssig, so dass sie die Oberflächen der eingesetzten Stoffe, wie beispielsweise Pulverlacke, Blähglas und Jute oder Seegras, benetzen und vorteilhafterweise ein ideales Brückenmedium zwischen den zu verbindenden Teilchen herstellen. Die gleichmäßige Belegung der eingesetzten Komponenten durch die Bestandteile des Ein- oder Zweikomponenten-Systems wird vorteilhafterweise noch durch die Reibungsladung der Bestandteile der Pulverlackreste verbessert.

Die so gewonnenen Produkte (Formkörper) weisen verbesserte chemische, mechanische und physikalische Eigenschaften gegenüber den bekannten Verbundstoffen auf, wobei gleichzeitig eine Substitution herkömmlicher Inhaltsstoffe durch umweltschonendere und kostengünstigere Ausgangsstoffe erfolgen kann. Insbesondere der Einsatz der nachwachsenden Rohstoffe wie Hanf, Jute, Seegras und Sisal sowie von recyceltem Glas und Kunststoffen, vor allem in Form von Pulverlackresten führt zu einer Verbesserung der gewonnenen Produkten, insbesondere zu einer verbesserten Feuchtigkeitsbeständigkeit, Schalldämmung, Wärmedämmung, chemischen Beständigkeit und dazu, dass die Produkte schwer entflammbar oder durch Basen zersetzbar sind.

Es zeigt sich, dass die erfindungsgemäßen Formkörper völlig überraschend schwerer entflammbar und witterungsbeständiger sind als bekannte Formkörper oder Produkte aus bekannten nachwachsenden Rohstoffen ohne die erfindungsgemäßen mineralischen Leichtzuschlagstoffe und Pulverlackreste umfassend Kunststoff mit mindestens 50 Gew.-% Polyester-, Epoxid-, Polystyrol-, Polyurethan- und/oder Polyamid-Anteilen.

Zur im wesentlichen endgültigen Aus- und Durchhärtung wird je nach Kunststoff und prozentuellem Anteil des Kunststoffbindemittels eine Zeit von 10 bis 20 Minuten benötigt, wenn die im Stand der Technik bekannten Kunstharze verwendet werden.

Bevorzugte Füllstoffe sind die genannten Blähglaskugeln bzw. Glasfraktionen, die vorteilhafterweise für die Glasindustrie zur Neuproduktion von Flaschen und Gläsern nicht mehr geeignet sind und durch einen Recyclingkreislauf generiert werden sollen. Die Blähglaskugeln sind sehr leicht, bruchkornfrei und extrem druckstabil. Sie haben eine durchschnittliche Größe von bevorzugt 0,04 bis 16 mm, wobei sich Körnungen der Größenordnung von besonders bevorzugt 0,1 bis 0,3 mm insbesondere bewährt haben.

Als pulverförmige thermoplastische und/oder duroplastische Kunststoffpartikel werden Pulverlackreste bevorzugt, wie sie in Lack- und Pulvereibetrieben in großen Mengen als Abfallstoff anfallen, wobei geeignete Korngrößen im Bereich von 10 bis 20 µm liegen.

Als nachwachsender Rohstoff hat sich insbesondere Seegras bewährt. Selbstverständlich können auch Algen bzw. alle Pflanzen verwendet werden, die in oder an Gewässern (Schilf) wachsen. Überraschenderweise führen'diese dazu, dass die Formkörper sehr temperaturbeständig, alkalibeständig und nicht brennbar sind. Selbstverständlich ist es während eines Brandes möglich, dass der Formkörper benachbart zu leicht brennbarem Material vorliegt. Wenn derartiges leicht entzündliches Material brennt, entstehen insbesondere durch den Einsatz von Seegrasgewächsen im Formkörper keine giftigen Gase. Durch den hohen Salzgehalt der Pflanzen sind die Materialien sehr haltbar und werden nicht von Schädlingen und Parasiten angefallen. Diese Stoffe regulieren Feuchtigkeit gut und puffern diese. Weiterhin besitzen Bestandteile dieser Pflanzen gute Dämmeigenschaften.

Weiterhin können in die Mischung der Ausgangsstoffe weitere, dem Fachmann bekannte Füll- und Verstärkungsstoffe wie Glasfasern oder -gewebe eingesetzt werden.

Im Gegensatz zu den bekannten Formkörpern, herstellbar nach den bekannten Verfahren, ist es möglich, mit den erfindungsgemäßen Formkörpern höhere Quadratmeterleistungen zu erzielen, da die Ausgangsstoffe besser handhabbar sind. Dies bedeutet auch, dass man mehrschichtige Platten herstellen kann, z. B. eine dreischichtige Platte, deren Kern einen geringen Bindemittelanteil und deren äußere Schichten einen höheren Bindemittelanteil aufweisen oder bei denen die einzelnen Schichten unterschiedliche Füll- und/oder Bindemittelsysteme besitzen. Dies wird z. B. dadurch erzielt, dass zunächst auf einer Unterlage die Kernschicht gestreut wird, z. B. aus einem Doppelbandkalander, wie z. B. eine 2 mm Platte mit 10 Gew.-% Epoxidharz als Bindemittel, und dann auf die jeweiligen Seiten dieser Platte eine 2 mm Schicht mit 10 Gew.-% Polyurethan als Bindemittel aufgebracht wird. Mithilfe dieser veränderbaren Zusammensetzung bzw. durch eine spezifische Auswahl der eingesetzten Ausgangsstoffe sind vorteilhafterweise unterschiedliche Werkstoffeigenschaften realisierbar, wie z. B. geringes spezifisches Gewicht, Wärmeisolationsvermögen, Wärmeleitung, Steifigkeit, mechanische Festigkeit, elektrische Leitfähigkeit bzw. Isolierung, magnetische Leitfähigkeit, paramagnetische Eigenschaften, Korrosionsbeständigkeit und schwere Entflammbarkeit.

In einer weiteren bevorzugten Ausführungsform sind die mineralischen Leichtzuschlagstoffe ausgewählt aus der Gruppe umfassend Glasschaumschotter, Glasschaumgranulat, Blähglas, Blähbeton und/oder Ceralith. Vorteilhafterweise sind in diesem Falle die Formkörper besonders temperaturbeständig und ausgesprochen wärmedämmend sowie sehr geruchsneutral.

In einer weiteren bevorzugten Ausführungsform ist das Blähglas ausgewählt aus der Gruppe umfassend Foamglas, Schaumglas, Wasserglas, Isolierglas, Überfangglas, Eisblumenglas, Kali-Wasserglas, Kalium-Wasserglas und/oder Natron-Wasserglas. Vorteilhafterweise weisen derartige Formkörper besonders geringe Dichten, sind besonders temperaturbeständig und sehr chemisch beständig.

In einer weiteren bevorzugten Ausführungsform ist vorgesehen, dass der Formkörper gemäß der Erfindung einen Leichtzuschlagstoff mit einer Dichte von unter 1 g/cm³ aufweist. Vorteilhafterweise weisen in diesem Falle die Formkörper viele Oberflächengestaltungsmöglichkeiten und eine unbegrenzte Möglichkeit der Formgestaltung auf und weiterhin sind sie sehr stabil und druckfest.

Dem Fachmann sind schwere und leichte Zuschlagstoffe bekannt. Die Verwendung von schweren Zuschlagstoffen führt bevorzugt zu Rohdichten zwischen 2.600 und 2.900 kg/m³. Leichtzuschlagstoffe im Sinne der Erfindung sind Zuschlagstoffe, die zu Rohdichten führen, die geringer sind als die der schweren Zuschlagstoffe und demgemäß zu einem leichteren Gewicht führen. Überraschenderweise führt die Verwendung von Leichtzuschlagstoffen mit einer Dichte von unter 1 g/ cm³ zu einem Formkörper, der sehr leicht ist aber überraschend chemisch beständig und stabil und druckfest ist.

In einer weiteren bevorzugten Ausführungsform der Erfindung werden die nachwachsenden Rohstoffe aus Pflanzen gewonnen, ausgewählt aus der Gruppe umfassend Alant, Algen, Anis, Arnika, Bärlauch, Baldrian, Basilikum, Baumwolle, Blauglockenbaum, Beifuss, Beinwell, blauer Steinklee, Blaumohn, Bohnenkraut, Borretsch, Breitwegerich, große Brennnessel, Buche, Chinaschilf, Dill, Dost (Staudenmajoran), iberischer Drachenkopf, echte Kamille, Eibisch, Erbse, Estragon, Färberdistel, Färberwaid, Faserhirse, Faserlein, Fasernessel, Fenchel, roter Fingerhut, wolliger Fingerhut, Flachs, Gerste, Hafer, Hanf, Hirse, Zuckerhirse, Johanniskraut, Jute, Kartoffel, Kegelblume (Sonnenhut), Kenaf, Knoblauch, Kokos, Koriander, Krambe, Kümmel, Lein, Leindotter, Liebstöckel, Lupinen, Mais, Majoran, Melisse, Pappel, Petersilie, Pfefferminze, Raps, Rhabarber, Riesenknöterich, Ringelblume, Rizinus, Roggen, Rübsen, Schabzigerklee, Schilf, Sisal, Soja, Spitzwegerich, Sonnenblume, Süßlupinen, Tanne, Thymian, Topinambur, Torfmoose, rauer Wallwurz, Wegerich, Weide, Weizen, Wildbirne, kreuzblättrige Wolfsmilch, Zitronenmelisse und/oder Zuckerrübe. Überraschenderweise führt die Verwendung der genannten nachwachsenden Rohstoffe zu ähnlich guten Eigenschaften wie die Verwendung von Seegras, d. h. zu einer überraschend geringen Dichte, zu guten wasserabweisenden Eigenschaften, zu Temperaturbeständigkeit, zu Nicht-Brennbarkeit, zu sehr guten Wärmedämm- und Schallabsorptionseigenschaften, zu chemischer Beständigkeit sowie zu Alkali- und Witterungsbeständigkeit sowie zu einer überraschend guten Geruchsneutraliät, wobei die Formkörper sehr stabil und druckfest sind sowie Pilzen und anderen Schädlingen keine Nährböden bieten und an der Oberfläche gut gestaltet, wie z. B. gepulvert, gelackt, gestrichen oder durch Selbsteinfärbung bzw. durch den Überzug von Kunststoffen werden können. Es war überraschend, dass sich die erfindungsgemäßen Formkörper auf diese zahlreichen Arten an ihrer Oberfläche behandeln lassen.

In einer weiteren bevorzugten Ausführungsform ist ein Formkörper bevorzugt, der außerdem einen Ein- oder Zweikomponentenklebstoff umfasst. Bei derartigen Formkörpern ist es besonders vorteilhaft, dass Füllstoffe verwendet werden können, für die Deponieverbot besteht und die ganz besonders energiesparend hergestellt werden können. Bevorzugt werden hierbei die Pulverlackreste, die mineralischen Leichtzuschlagstoffe und die nachwachsenden Rohstoffe, bevorzugt zusammen mit einem Ein- und/oder Zweikomponentenkleber gemischt und die anschließend entstandene Mischung bei einer Temperatur von 5° bis 45° Celsius einem Zeitraum von 0,1 bis 100 Minuten verpresst.

In einer weiteren bevorzugten Ausführungsform ist vorgesehen, dass die genannten Ausgangsstoffe in pulverisierter Form gemischt werden, wodurch ein lagerfähiges Halbfabrikat entsteht und dieses Halbfabrikat mit einem Ein- und/oder Zweikomponentenkleber in Kontakt gebracht wird. Vorteilhafterweise entstehen hier besonders witterungsbeständige und besonders schall- und wärmeabsorbierende Formkörper.

In einer weiteren bevorzugten Ausführungsform der Erfindung werden die trockenen Ausgangsstoffe ausgewählt aus nachwachsenden pflanzlichen Trockenprodukten wie Hanf, Jute und Seegras, aufbereitetem Altglas, Pulverlackresten und ggf. noch Keramik, Sand, Textilien/Gewebe oder anderen Verbundstoffen. Hierbei werden die nachwachsenden Rohstoffe als Füllstoffe verwendet; als Füllstoff kann aber auch recyceltes Glas bzw. die Pulverlackreste, insbesondere Thermoplast- und/oder Duroplast-Pulver verwendet werden. Diese Komponenten werden z. B. mit einem üblichen Mischer bei Umgebungstemperatur gründlich gemischt, bis sich die Füllstoffe gleichmäßig mit dem ebenfalls zugegebenen Epoxid- und/oder Polyurethanharz bei Raumtemperaturen und Druck - z. B. in einer hydraulischen Plattenpresse - zu einem definierten Formkörper oder Formbehälter verbunden haben. Die Verformung kann auch in einem Doppelbandkalander durch Taktpressen oder durch manuelles Bestücken von Formen, Einrütteln oder leichte Druckanwendung erfolgen, so dass die Erzeugnisse universell herzustellen sind.

In einer weiteren Ausführungsform sind bereits im Herstellungs- bzw. Ausformprozess zusätzliche lösemittelfreie Zweikomponenten-Systeme auf Epoxid- und/oder Polyurethanbasis zugesetzt, wobei die Härtekomponente bevorzugt aus Isocyanaten besteht. Die lösemittelfreien Zweikomponenten-Systeme sind im frischen Zustand relativ flüssig und benetzen die Oberfläche der oben genannten Füllstoffe vollständig und stellen so ein Brückenmedium zwischen den zu verbindenden Teilchen her. Die gleichmäßige Belegung wird auch durch die Reibungsladung des Kunststoffpulvers bewirkt. Nach einer definierten Aushärtzeit kann das Kombinationselement aus dem Formbehälter fertig entnommen, weiter verarbeitet oder als Endprodukt eingesetzt werden.

Die anmeldungsgemäße Lehre zeichnet sich durch folgende Merkmale aus:
- Abkehr vom technisch Üblichen
- neue Aufgabenstellung
- Vorliegen eines seit langem ungelösten dringenden Bedürfnisses für die Lösung des mit der Erfindung gelösten Problems
- bisheriges vergebliches Bemühen der Fachwelt
- die Einfachheit der Lösung spricht für erfinderische Tätigkeit, insbesondere da sie kompliziertere Lehren ersetzt
- Entwicklung der wissenschaftlichen Technik ging in eine andere Richtung
- entwicklungsstraffende Leistung
- Fehlvorstellungen der Fachwelt über die Lösung des entsprechenden Problems (Vorurteil)
- technischer Fortschritt, wie z. B.: Verbesserung, Leistungssteigerung, Verbilligung, Ersparnis an Zeit, Material, Arbeitsstufen, Kosten oder schwer beschaffbaren Rohstoffen, erhöhte Zuverlässigkeit, Beseitigung von Fehlern, Qualitätshebung, Wartungsfreiheit, größere Effektivität, höhere Ausbeute, Vermehrung der technischen Möglichkeiten, Bereitstellung eines weiteren Mittels, Eröffnung eines zweiten Weges, Eröffnung eines neuen Gebietes, erstmalige Lösung einer Aufgabe, Reservemittel, Alternativen, Möglichkeit der Rationalisierung, Automatisierung oder Miniaturisierung oder Bereichung des Arzneimittelschatzes
- glücklicher Griff, da aus einer Vielzahl von Möglichkeiten eine bestimmte gewählt wurde, deren Ergebnis nicht vorausgesagt werden konnte, daher handelt es sich um ein patentwürdigen glücklichen Griff)
- Irrtum in Entgegenhaltungen
- junges Gebiet der Technik
- Kombinationserfindung, d.h. mehrere bekannte Elemente werden zu einer Kombination zusammengeführt, die einen überraschenden Effekt aufweist
- Lizenzvergabe
- Lob der Fachwelt und
- wirtschaftlicher Erfolg.

Diese Eigenschaften betreffen insbesondere die bevorzugten Ausführungsformen der Erfindung.

Die überraschenden Eigenschaften bedingen zahlreiche Einsatzgebiete und Verwendungen der erfindungsgemäßen Formkörper. Insbesondere in der Bauindustrie können diese als leicht zu bearbeitender, recyclebarer Baustoff verwendet werden, insbesondere als ziegelartige Einzelelemente, als Fertigbauteil, als Verbindungselemente für Wand- und Fassadenkonstruktionen, zur Wärmeisolierung, zur Schallisolierung bzw. zur Trittisolierung, Feuchtigkeitsisolierung in, an, auf und/oder unter Wänden, Türen und Fußböden, bzw. als Verkleidungsmaterial für Wände, Türen sowie für andere Elemente in unterschiedlichsten Ausführungsformen (Platten, Fliesen, Paneele und andere). Die erfindungsgemäßen Formkörper können demgemäß allgemein als Industrieartikel bei Verkleidungen, bei Gehäusen von Computern u. ä. aber auch bei Haushaltswaren unterschiedlichster Art als Verpackungsmaterial, als Konstruktionselemente, Verkleidungselemente für Möbel und in der Auto-, Flugzeug- und/oder Bahnindustrie verwendet werden. Durch die freien geometrischen Gestaltungsmöglichkeiten der Formkörper und ihre leichte Bearbeitbarkeit ist eine Anwendung für architektonische Elemente sowie Plastiken auch im künstlerischen Sinne möglich. Es war überraschend, dass sich die erfindungsgemäßen Formkörper außergewöhnlich gut sägen, schrauben, bohren, kleben und nieten lassen. Vorteilhafterweise können die erfindungsgemäßen Formkörper besonders gut als Fassadenplatte eingesetzt werden, indem sie beispielsweise auf eine Holz- oder Metalllattung aufgebracht werden. Vorteilhafterweise ist dadurch weder ein getrennter Dämmstoff noch ein oberflächlich aufgetragener Putz nötig, so dass eine konventionell erstellte, gedämmte und hintergelüftete Fassade ersetzt werden kann. Durch spezielle Bearbeitung der Oberfläche wie z. B. Prägung bei der Plattenherstellung kann ein handelsüblicher bekannter Putz leicht aufgetragen werden. Überraschenderweise haben die erfindungsgemäßen Formkörper einen sehr niedrigen Ausdehnungskoeffizienten, so dass keine Bewegung des Untergrundes und somit kein Reißen des Putzes erfolgt. Es war weiterhin überraschend, dass bei dunkler Farbe wegen der guten Wärmedämmeigenschaften der Formkörper kein Aufheizen der Fassade auftritt. Solche Fassaden sind vorteilhafterweise sehr gut überstreichbar. Demgemäß eignet sich das erfindungsgemäße Material - d. h. die Formkörper - sehr gut für die Sanierung von bestehenden so genannten vorgehängten Altfassaden durch Überdecken. Es war weiterhin überraschend, dass die erfindungsgemäßen Formkörper auf ihrer Oberfläche sehr gut strukturiert werden können. Sie können beispielsweise sehr gut lackiert, gepulvert, mit Kunststofffolien überzogen oder selbst als Plattenmaterial eingefärbt werden. Besonders überraschend war es, dass die anmeldungsgemäßen Formkörper ihre vorteilhaften Eigenschaften dann aufweisen, wenn sie mit Pulverlackresten hergestellt werden.

Im Folgenden soll die Erfindung anhand von Beispielen näher erläutert werden, ohne auf diese Beispiele begrenzt zu sein.

### Beispiel 1

Pulverlackreste (auf Polyester/Epoxidbasis) von der mittleren Teilchengröße 10-25 µg, recycelte Glaskugeln (Poraver) mit einer Korngrößenverteilung von 0.1-0.3 mm und Seegras (zostera dämm)/(Pulverkonsistenz) wurden in einem Trommelmischer bei normaler Raumtemperatur (15-20°C) ca. 5-10 Minuten lang gut vermischt. Dieses Halbfabrikat kann, so wie es ist, gut gelagert oder weiterverarbeitet werden. Dieses Halbfabrikat wird anschließend mit einem lösemittelfreien Zweikomponenten-Klebstoff (Henkel-Ubatol UK 820) auf Polyurethanbasis intensiv 5-10 Minuten lang vermischt, wobei die beiden Komponenten (Harzkomponente und Härtekomponente) in einem Gewichtsverhältnis von 4:1 zu verwenden sind. Durch die spontan einsetzende chemische Reaktion wird eine stabile Bindung hervorgerufen, so dass das Gemisch in eine Form eingeschüttet werden kann. Die Abmessung der Form beträgt 300 x 300 x 10 mm. Nun wird diese Form mit einer Abdeckplatte versehen und in eine beheizbare Plattenpresse geschoben. Bei 20°C und 100 MPa wird das Gemisch ca. 1 Minute verpresst, anschließend wird entformt und ca. 10 Minuten lang zum vollständigen Aus- bzw. Durchhärten ruhen lassen.

Des Gemisch bestand aus:
30 Gew.-% Pulverlackreste
20 Gew.-% recycelte Glaskugeln
20 Gew.-% Seegras (Pulverkonsistenz)
30 Gew.-% Zweikomponentenklebstoff

Es ergab sich ein dauerhafter, fester Verbund mit einer sehr glatten, ebenen Oberfläche.

### Beispiel 2 (Vergleich)

30 Gew.-% Pulverlackreste
20 Gew.-% recycelte Glaskugel
20 Gew.-% Flammschutzmittel (Ammonium Polyphosphat/Zinkborat)
30 Gew.-% Zweikomponentenklebstoff
wurden in einem Mischer intensiv vermischt, anschließend in eine Plattenform, die mit einer PTFE-Beschichtung versehen ist, geschüttet. Es erfolgte eine Pressung in einer Plattenpresse bei 20°C und 100 MPa für 1 Minute. Es wurde entformt und ca. 10 Minuten lang ruhen lassen. Die Brandversuche, welche mit dem Plattenmaterial nach DIN 4102 durchgeführt wurden, verliefen positiv.

### Beispiel 3

30 Gew.-% Pulverlackreste
10 Gew.-% recycelte Glaskugel
20 Gew.-% Seegras (Pulverkonsistenz)
10 Gew.-% Flammschutzmittel
30 Gew.-% Zweikomponentenklebstoff
wurden gemischt, gepresst, entformt und ausgehärtet. Bei den Brandversuchen mit diesem Plattenmaterial (wobei ein Austausch der Füllkomponenten erfolgte) zeigten die Ergebnisse gleiche Werte wie bei Beispiel 2, obwohl ein Anteil der teureren Flammschutzmittel gegen das preisgünstigere und umweltfreundliche Seegras ausgetauscht wurde.

## Patentansprüche

1. Formkörper, herstellbar nach einem Verfahren,
**dadurch gekennzeichnet, dass** die Ausgangsstoffe umfassend
(a) Pulverlackreste, umfassend Kunststoffe mit mindestens 50 Gew.-% Poly-ester-, Epoxid-, Polystyrol-, Polyurethan- und/oder Polyamid-Anteil;
(b) mineralische Leichtzuschlagstoffe und
(c) nachwachsende Rohstoffe
gemischt werden und anschließend die entstandene Mischung bei einer Temperatur von 5° bis 45° Celsius in einem Zeitraum von 0,1 bis 100 Minuten verpresst wird.

2. Formkörper nach dem vorhergehenden Anspruch,
**dadurch gekennzeichnet, dass**
die mineralischen Leichtzuschlagstoffe Glasschaumschotter, Glasschaumgranulat, Blähglas, Blähbeton und/oder Ceralith sind.

3. Formkörper nach Anspruch 2,
**dadurch gekennzeichnet, dass**
das Blähglas ausgewählt ist aus der Gruppe umfassend Foamglas, Schaumglas, Wasserglas, Isolierglas, Überfangglas, Eisblumenglas, Kali-Wasserglas, Kalium-Wasserglas und/oder Natron-Wasserglas.

4. Formkörper nach einem der vorhergehenden Ansprüche,
**dadurch gekennzeichnet, dass**
der Leichtzuschlagstoff eine Dichte von unter 1 g pro cm³ aufweist.

5. Formkörper nach einem der vorhergehenden Ansprüche,
**dadurch gekennzeichnet, dass**
die nachwachsenden Rohstoffe gewonnen werden aus Pflanzen ausgewählt aus der Gruppe umfassend Alant, Algen, Anis, Arnika, Bärlauch, Baldrian, Basilikum, Baumwolle, Blauglockenbaum, Beifuss, Beinwell, blauer Steinklee, Blaumohn, Bohnenkraut, Borretsch, Breitwegerich, große Brennnessel, Buche, Chinaschilf, Dill, Dost (Staudenmajoran), iberischer Drachenkopf, echte Kamille, Eibisch, Erbse, Estragon, Färberdistel, Färberwaid, Faserhirse, Faserlein, Fasernessel, Fenchel, roter Fingerhut, wolliger Fingerhut, Flachs, Gerste, Hafer, Hanf, Hirse, Zuckerhirse, Johanniskraut, Jute, Kartoffel, Kegelblume (Sonnenhut), Kenaf, Knoblauch, Kokos, Koriander, Krambe, Kümmel, Lein, Leindotter, Liebstöckel, Lupinen, Mais, Majoran, Melisse, Pappel, Petersilie, Pfefferminze, Raps, Rhabarber, Riesenknöterich, Ringelblume, Rizinus, Roggen, Rübsen, Schabzigerklee, Schilf, Sisal, Soja, Spitzwegerich, Sonnenblume, Süßlupinen, Tanne, Thymian, Topinambur, Torfmoose, rauer Wallwurz, Wegerich, Weide, Weizen, Wildbirne, kreuzblättrige Wolfsmilch, Zitronenmelisse und/oder Zuckerrübe, bevorzugt Seegras.

6. Formkörper nach einem der vorhergehenden Ansprüche,
**dadurch gekennzeichnet, dass**
er außerdem einen Ein- oder Zweikomponenten-Klebstoff umfasst.

7. Formkörper, nach einem der vorhergehenden Ansprüche,
**dadurch gekennzeichnet, dass**
die Ausgangsstoffe gemäß Anspruch 1 (a), 1 (b) und 1 (c) zusammen mit einem Ein- und/oder Zweikomponenten-Kleber gemischt werden.

8. Formkörper nach einem der vorhergehenden Ansprüche,
**dadurch gekennzeichnet, dass**
das Pressen bei einem Druck von 5 bis 300 MPa, bevorzugt bei 20 bis 200 MPa, ganz besonders bevorzugt bei 100 MPa erfolgt.

9. Formkörper nach einem der vorhergehenden Ansprüche,
**dadurch gekennzeichnet, dass**
zunächst die Ausgangsstoffe gemäß Anspruch 1 (a), 1 (b) und 1 (c) in pulverisierter Form gemischt werden, wodurch ein lagerfähiges Halbfabrikat entsteht und dieses Halbfabrikat mit einem Ein- und/oder Zweikomponentenkleber in Kontakt gebracht wird.

10. Formkörper nach einem der vorhergehenden Ansprüche,
**dadurch gekennzeichnet, dass**
die Temperatur 10 bis 30°C, bevorzugt von 17 bis 25°C ist.

## Claims

1. Mould, manufacturable according to a process, **characterised in that** the starting materials comprising
(a) powder coating remains comprising plastics with at least 50 percent by weight polyester, epoxide, polystyrene, polyurethane and/or polyamide;
(b) mineral lightweight aggregates and
(c) renewable raw materials
are mixed and the resulting mixture then pressed at a temperature of 5° to 45° Celsius for a period of 0.1 to 100 minutes.

2. Mould according to the previous claim, **characterised in that** the mineral lightweight aggregates are foam glass chips, foam glass granules, frothed glass, gas concrete and/or ceralith.

3. Mould according to claim 2, **characterised in that** the frothed glass is selected from the group comprising foam glass, frothed glass, water glass, insulated glass, flashed glass, arctic glass, potash water glass, potassium water glass and/or natron water glass.

4. Mould according to one of the previous claims, **characterised in that** the lightweight aggregate has a density less than I g per cm³.

5. Mould according to one of the previous claims, **characterised in that** the renewable primary materials are extracted from plants selected from the group comprising yellowhead, algae, anise, arnica, wild garlic, valerian, basil, cotton, princess tree, mugwort, comfrey, blue sweet clover, blue poppy, savory, borage, broadleaf plantain, stinging nettle, beech tree, switchgrass, dill, oregano (origanum), Iberian dragonhead, chamomile, marshmallow, pea, tarragon, safflower, dyer's woad, fiber millet, fiber flax, fiber nettle, fennel, common foxglove, Grecian foxglove, flax, barley, oat, hemp, millet, sweet sorghum, St. John's wort, jute, potato, cone-flower (Echinacea), kenaf, garlic, coconut, coriander, crambe, caraway, flax, false flax, lovage, lupine, corn, marjoram, balm, poplar, parsley, peppermint, rape, pie plant, giant knotweed, marigold, castor oil plant, rye, turnip rape, blue fenugreek, reed, sisal, soy, ribwort, sunflower, sweet lupine, fir, thyme, sunchoke, sphagnum, rough comfrey, plantain, willow, wheat, common pear, caper spurge, lemon balm and/or sugar beet, preferably seaweed.

6. Mould according to one of the previous claims, **characterised in that** it also includes a one or two-component adhesive.

7. Mould according to one of the previous claims, **characterised in that** the starting materials according to claim 1 (a), 1 (b) and 1 (c) are mixed together with a one and/or two-component adhesive.

8. Mould according to one of the previous claims, **characterised in that** the pressing is performed at a pressure of 5 to 300 MPa, preferably at 20 to 200 MPa, particularly preferred at 100 MPa.

9. Mould according to one of the previous claims, **characterised in that** first the starting materials according to claim 1 (a), 1 (b) and 1 (c) are mixed in a powdered form whereby a storable semi finished product is created and this semi finished product is brought into contact with a one and/or two-component adhesive.

10. Mould according to one of the previous claims, **characterised in that** the temperature is between 10 and 30°, preferably between 17 and 25°.

## Revendications

1. Corps formé, pouvant être fabriqué selon un procédé **caractérisé en ce que** les matières de base comprennent
(a) des restes de peinture en poudre, comprenant des matières synthétiques avec au moins 50 % de poids de parts de polyester, d'époxy, de polystyrène, de polyuréthane et/ou polyamide ;
(b) des agrégats légers minéraux et
(c) des matières premières renouvelables
sont mélangés et ensuite le mélange obtenu est compressé à une température de 5° à 45° Celsius sur une période de 0,1 à 100 minutes.

2. Corps formé selon la revendication précédente,
**caractérisé en ce que**
les agrégats légers sont des concassés de mousse de verre, des granulats de mousse de verre, du verre expansé, d'argile expansé et/ou du Ceralith.

3. Corps formé selon la revendication 2
**caractérisé en ce que**
le verre expansé est du groupe comprenant du verre foam, du verre mousse, du verre soluble, du verre isolant, du verre doublé, du verre givré à la colle, du verre soluble à la potasse, du verre soluble de potassium et/ou du silicate de soude.

4. Corps formé selon l'une des revendications précédentes
**caractérisé en ce que**
l'agrégat léger présente une densité de moins de 1 g par cm³.

5. Corps formé selon l'une des revendications précédentes
**caractérisé en ce que**
les matières premières renouvables sont extraites à partir de plantes choisies du groupe comprenant de l'inule, des algues, de l'anis, de l'arnica, d'ail sauvage, de la valériane, du basilic, du coton, du paulownia impérial, de l'armoise commune, de la consoude, du mélilot bleu, du pavot somnifère, de la sarriette, de la bourache, du grand plantain, grosses orties, du hêtre, du miscanthus, de l'aneth, de l'origanum (marjolaine), de la tête de dragon ibérique, de la camomille véritable, de la guimauve , des petits pois, de l'estragon, du carthame des teinturiers, du pastel des teinturiers, du sorgo fibre, du lin fibre, de l'ortie dioïque, du fenouil, de la digitale rouge, de la digitale laineuse, du lin textile, de l'orge, de l'avoine, du chanvre, du millet, du sorgho sucrier, du millepertuis, de la jute, de la pomme de terre, de la puschkinia scilloides (échinacée), du kenaf, de l'ail, du coco, de la coriandre, du crambe, du cumin, du lin, de la caméline cultivée, de la livèche, du lupin, du maïs, de la marjolaine, de la mélisse, du peuplier, du persil, de la menthe, du colza, de la rhubarbe, de la renoué géante, du souci officinal, du ricin, de la seigle, de la brassica rapa, de la trigonelle bleue, du jonc, du sisal, du soja, du plantain lancéolé, du tournesol, du lupin sucré, du sapin, du thym, du topinambour, de la sphaigne, de la consoude rude, du plantago, du saule, du blé, de la poire sauvage, de l'épurge, de la mélisse officinale et/ou de la betterave à sucre, de préférence de la zostère.

6. Corps formé selon l'une des revendications précédentes
**caractérisé en ce que**
il comprend en outre une colle à une ou deux composantes.

7. Corps formé selon l'une des revendications précédentes
**caractérisé en ce que**
les matières de base selon la revendication 1 (a), 1 (b) et 1 (c) sont mélangés avec une colle à une et/ou deux composantes.

8. Corps formé selon l'une des revendications précédentes
**caractérisé en ce que**
la compression s'effectue à une pression de 5 à 300 MPa, de préférence à 20 à 200 MPa, de réellement de préférence à 100 MPa.

9. Corps formé selon l'une des revendications précédentes
**caractérisé en ce que**
tout d'abord les matières de base selon la revendication 1 (a), 1 (b) et 1 (c) sont mélangés sous une forme pulvérisé en générant un semi-produit entreposable et ce semi-produit est mis en contact avec une colle à une et/ou deux composantes.

10. Corps formé selon l'une des revendications précédentes
**caractérisé en ce que**
la température est de 10 à 30°C, de préférence de 17 à 25°C.
